# EUROPEAN PATENT APPLICATION

(11) **EP 2 498 447 A1**
(43) Date of publication of application: **12.09.2012**
(21) Application number: 10838541.0
(22) Date of filing: 12.05.2010
(51) Int. Cl.: H04L 12/28

(54) **RADIO ACCESS DATA TERMINAL AND SYSTEM AND METHOD FOR IMPLEMENTING DATA COMMUNICATION THEREOF**

(30) Priority: 24.12.2009 CN 200910260172
(71) Applicant: ZTE Corporation, Shenzhen, Guangdong 518057 (CN)
(72) Inventor: TIAN, Xiaoguang, Guangdong 518057 (CN)
(74) Representative: Jansen, Cornelis Marinus
(86) International application number: PCT/CN2010/072659
(87) International publication number: WO 2011/075975

(57) **Abstract**

The disclosure discloses a radio access data terminal and a system and a method for implementing data communications by the radio access data terminal, wherein the system comprises: the radio access data terminal, which is configured to process a downlink radio signal received by the radio access data terminal to obtain a downlink digital In-phase/Quadrature-phase (I/Q) signal, transmit the downlink digital I/Q signal to a general-purpose computer, and perform a bus protocol conversion on uplink digital information output by the general-purpose computer, modulate the converted signal and then transmit the modulated signal; and the general-purpose computer, which is configured to perform data service processing on the downlink digital I/Q signal received by a system bus and output uplink digital information which needs to be transmitted. Therefore, the disclosure can solve the problems of high power consumption and large heat dissipating capacity of an existing radio access data terminal and the resulting low utilization rate of a Central Processing Unit (CPU) of the general-purpose computer.

## Description

### TECHNICAL FIELD

The disclosure relates to the field of mobile communications, particularly to a radio access data terminal, a system and method for implementing data communications thereof.

### BACKGROUND

A radio access data terminal applied to a general-purpose computer, such as a Universal Serial Bus (USB) Dongle, an Express CARD, a Personal Computer Memory Card International Association (PCMCIA) data card or the like, has a baseband processor, which generally adopts an architecture of Advanced Reduced Instruction Set Computer (RISC) Machines (ARM) and Digital Signal Processing (DSP) to process such data service as signaling, protocol and the like, and exchanges data with the general-purpose computer by a Universal Serial Bus (USB), a Pulse Code Modulation (PCM) bus and the lik to realize data communications. The general-purpose computer contains a Personal Computer (PC), Laptop and the like. Based on the above structure of the radio access data terminal, the processing of the signaling and protocol does not need to occupy resource of a Central Processing Unit (CPU) in the general-purpose computer; although this brings an advantage that the radio access data terminal has high independence, problems of high power consumption, large heat dissipating capacity and expensive cost of the baseband processor exist at the same time, besides, the CPU in the general-purpose computer is less utilized and the processing capability of the general-purpose computer cannot be fully utilized since the signaling and protocol are processed by the baseband processor.

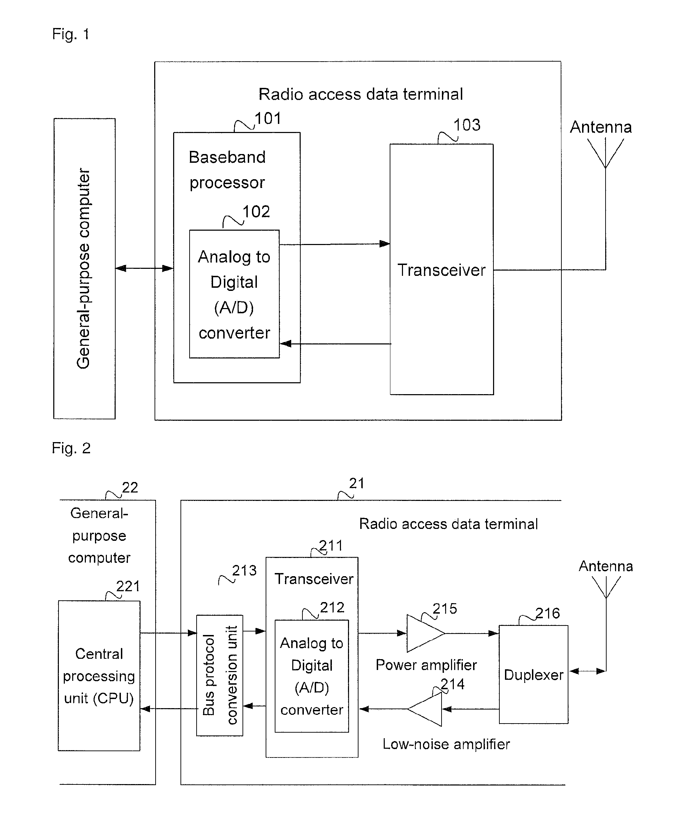

Here, for better understanding, a structure of an existing radio access data terminal is briefly described, as shown in Fig. 1, the basic structure of the existing radio access data terminal comprises: a baseband processor 101, an Analog to Digital (A/D) converter 102 integrated within the baseband processor 101, and a transceiver 103; wherein the baseband processor 101 is configured to process data service such as signaling, protocol and the like and exchange data with a general-purpose computer by the USB, PCM bus (included but not limited the abovementioned buses) and other form to perform data communications; the A/D converter 102 is configured to convert an analog In-phase/Quadrature-phase (I/Q) signal output by the transceiver 103 into a digital baseband signal, transmit the digital baseband signal to the baseband processor 101 to perform data service processing, convert the digital baseband signal output by the baseband processor 101 into an analog I/Q signal, and transmit the analog I/Q signal to the transceiver 103; the transceiver 103 is configured to perform a frequency mixing on a radio signal from an air interface to obtain the analog I/Q signal and then transmit the analog I/Q signal to the A/D converter 102, modulate the analog I/Q signal output by the A/D converter 102 and transmit the modulated signal to the air interface.

It can be seen that, in the prior art, the radio access data terminal applied to the general-purpose computer has the problems of high power consumption, large heat dissipating capacity and the like due to containing the baseband processor, and performing the data service processing by the baseband processor will result in the problem that the CPU in the general-purpose computer is less utilized, so that waste of resources and cost is caused. Particularly for a battery-powered laptop, the radio access data terminal will further cause problems of less standby time of the laptop, lower heat dissipating experience satisfaction of a user and the like.

### SUMMARY

The disclosure provides a radio access data terminal, a system and method for implementing data communications thereof, which can solve problems of high power consumption and large heat dissipating capacity of an existing radio access data terminal and the resulting low utilization rate of a CPU in a general-purpose computer.

To achieve the purpose, the disclosure provides a system for implementing data communications by a radio access data terminal, which comprises the radio access data terminal and a general-purpose computer; the radio access data terminal is configured to process a downlink radio signal received by the radio access data terminal to obtain a downlink digital In-phase/Quadrature-phase (I/Q) signal and transmit the downlink digital I/Q signal to the general-purpose computer, and is further configured to convert and modulate uplink digital information output by the general-purpose computer and then transmit the modulated signal; and the general-purpose computer is configured to perform data service processing on the downlink digital I/Q signal received by the general-purpose computer; and is further configured to output uplink digital information which needs to be transmitted.

The general-purpose computer may comprise: a Central Processing Unit (CPU) configured to perform the data service processing on the downlink digital I/Q signal received by the general-purpose computer; and is further configured to output the uplink digital information which needs to be transmitted by a system bus.

The radio access data terminal may be specifically configured to perform a frequency mixing and an Analog to Digital (A/D) conversion on the downlink radio signal from an air interface to obtain the downlink digital I/Q signal, perform a bus protocol conversion on the downlink digital I/Q signal, and then transmit the converted signal to the system bus of the CPU; and is further configured to perform the bus protocol conversion on the uplink digital information output by the system bus of the CPU to obtain the uplink digital I/Q signal, and perform a Digital to Analog (D/A) conversion on the uplink digital I/Q signal.

Based on the same technological concept, the disclosure further provides a radio access data terminal, which comprises a transceiver and an Analog to Digital (A/D) converter; the transceiver is connected with the A/D converter, and is configured to perform a frequency mixing on a received downlink radio signal to obtain a downlink analog I/Q signal, transmit the downlink analog I/Q signal obtained by the frequency mixing to the A/D converter, modulate an uplink analog I/Q signal output by the A/D converter, and then transmit the modulated signal; and the A/D converter is configured to convert the downlink analog I/Q signal output by the transceiver into a downlink digital I/Q signal, and convert an uplink digital I/Q signal, which is obtained by performing a bus protocol conversion on uplink digital information output by a general-purpose computer, into the uplink analog I/Q signal to be transmitted by the transceiver; wherein the downlink digital I/Q signal after the bus protocol conversion is performed data service processing by a Central Processing Unit (CPU) in the general-purpose computer.

The radio access data terminal may further comprise: a bus protocol conversion module, which is connected with the A/D converter and the CPU in the general-purpose computer, and is configured to perform the bus protocol conversion on the downlink digital I/Q signal output by the A/D converter and then connect the converted signal to the system bus of the CPU, perform the bus protocol conversion on the uplink digital information output by the system bus of the CPU to obtain the uplink digital I/Q signal, and transmit the uplink digital I/Q signal to the A/D converter; and/or the bus protocol conversion module and/or the A/D converter are/is integrated into the transceiver.

The radio access data terminal may further comprise a low-noise amplifier, a power amplifier and a duplexer; the low-noise amplifier is connected with the transceiver, and is configured to receive the downlink radio signal from an air interface by an antenna, perform a low-noise amplification on the received downlink radio signal and then output the signal after the low-noise amplification to the transceiver; the power amplifier is connected with the transceiver, and is configured to perform a power amplification on the uplink radio signal modulated by the transceiver and then transmit the signal after the power amplification by the antenna; and the duplexer is connected with the low-noise amplifier and power amplifier, and is configured to separate a received signal and a transmitted signal.

Based on the same technological concept, the disclosure further provides a method for implementing data communications by a radio access data terminal, which comprises: processing a received downlink radio signal to obtain a downlink digital In-phase/Quadrature-phase (I/Q) signal, performing a bus protocol conversion on the downlink digital I/Q signal and then transmitting the converted downlink digital I/Q signal to a general-purpose computer by the radio access data terminal; and performing data service processing on the received downlink digital I/Q signal by the general-purpose computer; and/or outputting uplink digital information which needs to be transmitted by the general-purpose computer; converting and modulating the uplink digital information and then transmitting the moduled signal by the radio access data terminal.

The step of processing the received downlink radio signal by the radio access data terminal may comprise: performing a frequency mixing on the downlink radio signal from an air interface to obtain a downlink analog I/Q signal by the radio access data terminal; and performing an Analog to Digital (A/D) conversion on the downlink analog I/Q signal to obtain the downlink digital I/Q signal, performing the bus protocol conversion on the downlink digital I/Q signal and then transmitting the converted signal to a system bus of a CPU in the general-purpose computer.

The step of converting and modulating the uplink digital information and then transmitting the moduled signal by the radio access data terminal may comprise: performing the bus protocol conversion on the uplink digital information output by the general-purpose computer to obtain an uplink digital I/Q signal by the radio access data terminal; and performing a Digital to Analog (D/A) conversion on the uplink digital I/Q signal to obtain an uplink analog I/Q signal, modulating the uplink analog I/Q signal and then transmitting the moduled signal.

The method may further comprise: performing a low-noise amplification on the received downlink radio signal, and performing a power amplification on the modulated uplink radio signal by the radio access data terminal,

In the radio access data terminal and the system and the method for implementing data communications thereof provided by the disclosure, by transplating the function of the baseband processor in the existing radio access data terminal to the CPU in the general-purpose computer, the CPU can directly process the digital I/Q signal transmitted from and to the radio access data terminal; in this way, the radio access data terminal applied to the general-purpose computer does not have the baseband processor any more, so that both the power consumption and heat dissipating capacity of the radio access data terminal are reduced, and both the user experience satisfaction and the utilization rate of the CPU in the general-purpose computer are effectively improved.

Other feature and advantage of the disclosure will be described in the following specification and partially become obvious from the specification or known by implementing the disclosure. The purpose and other advantage of the disclosure can be realized and obtained by the specifically indicated structures in the written specification, claims and drawings.

### BRIEF DESCRIPTION OF THE DRAWINGS

Fig. 1 is a block diagram showing a structure of an existing radio access data terminal;
Fig. 2 is a block diagram showing a structure of a radio access data terminal according to an embodiment of the disclosure; and
Fig. 3 is a flow diagram showing a method for implementing data communications by a radio access data terminal according to an embodiment of the disclosure.

### DETAILED DESCRIPTION

In an embodiment of the disclosure, in order to solve problems of high power consumption and large heat dissipating capacity of an existing radio access data terminal and the resulting low utilization rate of a CPU in a general-purpose computer, a novel radio access data terminal is particularly provided, which is mainly applied to the general-purpose computer to enable the general-purpose computer access to a mobile internet wirelessly, and the general-purpose computer can establish data connection with a Metropolitan Area Network (MAN), a Wide Area Network (WAN) and the like by the radio access data terminal, thereby meeting wireless internet requirements of a user.

Preferred embodiments of the disclosure will be described with reference to specification and drawings, it should be understood that the preferred embodiments described here are only used for describing and explaining the disclosure rather than limiting it; besides, the embodiments of the disclosure and features therein can be combined with each other if not conflicting.

As shown in Fig. 2, an embodiment of the disclosure firstly provides a system for implementing data communications by a radio access data terminal, which comprises a radio access data terminal 21 and a general-purpose computer 22, wherein
the radio access data terminal 21 is configured to process a downlink radio signal received by the radio access data terminal 21 to obtain a downlink digital I/Q signal, transmit the downlink digital I/Q signal to the general-purpose computer 22, convert and modulate uplink digital information output by the general-purpose computer 22 and then transmit the modulated signal.

Preferably, the radio access data terminal 21 is configured to perform a frequency mixing on the downlink radio signal from an air interface, perform an A/D conversion on the downlink radio signal to obtain the downlink digital I/Q signal which is performed a bus protocol conversion and then transmitted to a system bus of a CPU 221 in the general-purpose computer 22, perform a D/A conversion on the uplink digital I/Q signal which is obtained by performing the bus protocol conversion on the uplink digital information output by the CPU 221, modulate the converted signal and then transmit the modulated signal; and
the general-purpose computer 22 is configured to perform data service processing on the downlink digital I/Q signal received by the general-purpose computer 22 and configured to output the uplink digital information which needs to be transmitted.

Preferably, the general-purpose computer 22 comprises the CPU 221 which is configured to perform the data service processing on the downlink digital I/Q signal received on the system bus and output the uplink digital information which needs to be transmitted by the system bus.

In a specific data service (such as a download service, a browsing service and the like), the uplink digital information which needs to be transmitted is generally determined according to data information input by a user through a man-machine interface in the general-purpose computer 22.

In a specific implementation, the CPU 221 can have a function of a baseband processor by designing a corresponding software for the general-purpose computer 22. It should be pointed out that the software can implement the function of the baseband processor. The software comprises: an interface driver software on a lower layer of an operating system, a communication protocol processing software on an upper layer of the operating system, an application processing software on an upper layer of a protocol processing software, and the like. Here, the interface driver software on the lower layer of the operating system can be designed for a specific hardware so that the interface driver software can drive a software on the upper layer which implements the function of the baseband processor.

In addition, the function of the bus protocol conversion can be implemented either by the radio access data terminal 21 or by the general-purpose computer 22. If the function of the bus protocol conversion is implemented by the radio access data terminal 21, then:
the radio access data terminal 21 is further configured to perform the bus protocol conversion on the downlink digital I/Q signal obtained by the A/D conversion, and perform the bus protocol conversion on the uplink digital information output on the system bus of the CPU 221 to obtain the uplink digital I/Q signal.
If the function of the bus protocol conversion is implemented by the general-purpose computer 22, then a bus protocol conversion module is generally added on a mainboard in the general-purpose computer 22, and in a specific implemention, the bus protocol conversion module can be integrated into a display card.

The embodiment of the disclosure further provides a structure of the radio access data terminal 21, as shown in Fig. 2, the radio access data terminal 21 comprises a transceiver 211 and an A/D converter 212;
the transceiver 211 is connected with the A/D converter 212, and is configured to perform a frequency mixing on the downlink radio signal from the air interface to obtain the downlink analog I/Q signal, transmit the downlink analog I/Q signal obtained by the frequency mixing to the A/D converter 212, and modulate the uplink analog I/Q signal output by the A/D converter 212 and then transmit the modulated signal; and
the A/D converter 212 is configured to convert the downlink analog I/Q signal output by the transceiver 211 into a downlink digital I/Q signal, and convert the uplink digital I/Q signal, which is obtained by performing the bus protocol conversion on the uplink digital information output by the CPU 221, into the uplink analog I/Q signal to be transmitted by the transceiver 211. The downlink digital I/Q signal is, after being performed the bus protocol conversion, performed the data service processing by the CPU in the general-purpose computer.

In a specific implementation, as shown in Fig. 2, the A/D converter 212 can be integrated into the transceiver 211 in the form of software or hardware; of course, the A/D converter 212 and transceiver 211 can further be set as two independent functional modules.

Preferably, in order to have the function of the bus protocol conversion, the radio access data terminal 21 can further comprise a bus protocol conversion module 213;
the bus protocol conversion module 213 is connected with the A/D converter 212 and the CPU 221 in the general-purpose computer 22, and configured to perform the bus protocol conversion on the downlink digital I/Q signal output by the A/D converter 212 and then connect the converted signal to the system bus of the CPU 221, perform the bus protocol conversion on the uplink digital information output by the system bus of the CPU 221 to obtain the uplink digital I/Q signal, and transmit the uplink digital I/Q signal to the A/D converter 212.

In a specific implementation, the bus protocol is, for example, a Peripheral Component Interconnect (PCI) protocol, a PCI extended (PCI-X) protocol, a PCMCIA protocol, a USB protocol, an Industrial Standard Architecture (ISA) bus protocol, an Express CARD protocol or the like, and the digital I/Q signal is connected to the system bus of the CPU 221 in a bus form so as to achieve the purpose of directly processing the digital I/Q signal by the CPU 221 in the general-purpose computer 22.

The bus protocol conversion module 213 can be integrated into the transceiver 211 1 in the form of software or hardware; of course, as shown in Fig. 2, the bus protocol conversion module 213 and the transceiver 211 can further be set as two independent functional modules.

Preferably, in order to improve data transmission reliability of the radio access data terminal 21, the radio access data terminal 21 further comprises a low-noise amplifier 214, a power amplifier 215 and a duplexer 216;
the low-noise amplifier 214 is connected with the transceiver 211, and is configured to receive the downlink radio signal from the air interface by an antenna, perform a low-noise amplification on the received downlink radio signal and then output the signal after the low-noise amplification to the transceiver 211;
the power amplifier 215 is connected with the transceiver 211, and is configured to perform a power amplification on the uplink radio signal modulated by the transceiver 211 and then transmit the signal after the power amplification by the antenna; and
the duplexer 216 is connected with the low-noise amplifier 214 and the power amplifier 215, and is configured to separate a received signal and a transmitted signal so as to ensure simultaneous normal reception and transmission.

In the embodiment of the disclosure, by transplating the function of the baseband processor in the existing radio access data terminal 21 to the CPU 221 in the general-purpose computer 22, the CPU 221 can directly process the digital I/Q signal transmitted from and to the radio access data terminal 21; in this way, the radio access data terminal 21 applied to the general-purpose computer 22 does not have the baseband processor any more, so that both the power consumption and heat dissipating capacity of the radio access data terminal 21 are reduced, and both the user experience satisfaction and the utilization rate of the CPU 221 in the general-purpose computer 22 are effectively improved.

Based on the same technological concept, one embodiment provides a method for implementing data communications by a radio access data terminal, in summary, the embodiment comprises: two implementation processes of implementing downlink data communications and uplink data communications by the radio access data terminal;
(1) The implementation process of the downlink data communications comprises: the radio access data terminal processes a received downlink radio signal to obtain a downlink digital I/Q signal, the downlink digital I/Q signal is performed a bus protocol conversion and then transmitted to a general-purpose computer which performs data service processing on the received downlink digital I/Q signal.

It should be explained that, the process that the radio access data terminal processes the received downlink radio signal comprises: the radio access data terminal performs a frequency mixing on the downlink radio signal from an air interface to obtain the downlink analog I/Q signal, performs an A/D conversion on the downlink analog I/Q signal to obtain the downlink digital I/Q signal, and performs the bus protocol conversion on the downlink digital I/Q signal and then transmits the converted signal to a system bus of a CPU in the general-purpose computer.
(2) The implementation process of the uplink data communications comprises: the general-purpose computer outputs uplink digital information which needs to be transmitted, and the radio access data terminal converts and modulates the uplink digital information and then transmits the modulated signal.

In the above process, the process that the radio access data terminal converts and modulates the uplink digital information and then transmits the modulated signal comprises: the radio access data terminal performs the bus protocol conversion on the uplink digital information output by the general-purpose computer to obtain the uplink digital I/Q signa, performs a D/A conversion on the uplink digital I/Q signal to obtain the uplink analog I/Q signal, modulates the uplink analog I/Q signal and then transmits the moduled signal.

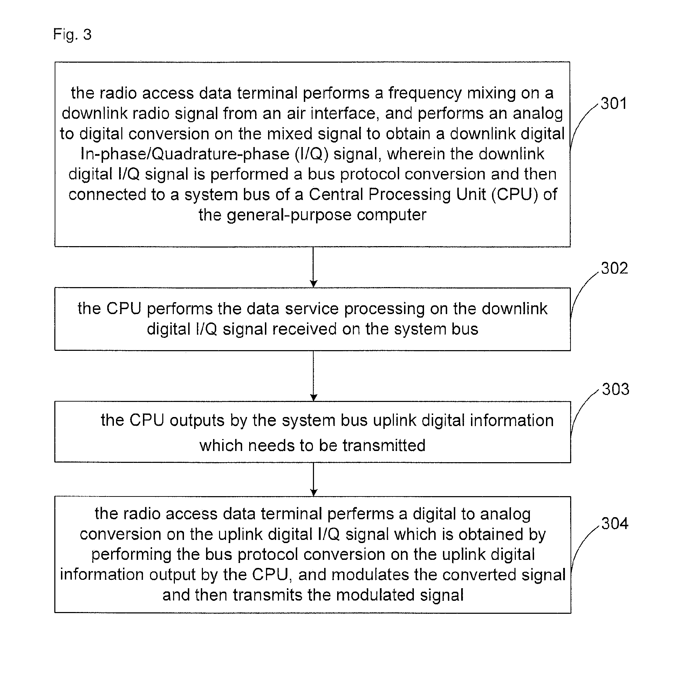

A preferred implementation flow is shown as Fig. 3, and Fig. 3 shows a method embodiment for implementing data communications by a radio access data terminal, the method embodiment comprises the following steps:
step 301: the radio access data terminal performs a frequency mixing on a downlink radio signal from an air interface, and performs an A/D conversion on the mixed signal to obtain a downlink digital I/Q signal; the downlink digital I/Q signal is performed a bus protocol conversion and then connected to a system bus of a CPU in a general-purpose computer;
step 302: the CPU performs data service processing on the downlink digital I/Q signal received by the system bus;
step 303: the CPU outputs uplink digital information which needs to be transmitted by the system bus;
   it should be pointed out that, the uplink digital information which needs to be transmitted is generally obtained by processing the data information, which is input by a user through a man-machine interface in the general-purpose computer, by the CPU;
step 304: the radio access data terminal perferms the A/D conversion on the uplink digital I/Q signal obtained by performing the the bus protocol conversion on the uplink digital information output by the CPU, modulates the converted signal and then transmits the modulated signal.

It should be explained that, the number is set for each step only for convenient description in the embodiment of the disclosure, in specific implemention, the data communications is implemented by interacting uplink and downlink data several times, and there is no strict temporal relation between the downlink data communications (step 301 and step 302) and the uplink data communications (step 303 and step 304), that is, step 303 and step 304 can further be executed before step 301 and step 302.

In a specific implemention, a preferred structure of the radio access data terminal comprises a transceiver, an A/D converter and a bus protocol conversion module, and based on the preferred structure of the radio access data terminal, in the implementation process, step 301 comprises the following sub-steps:
step a1: the transceiver performs a frequency mixing on the downlink radio signal from the air interface to obtain the downlink analog I/Q signal, and transmits the downlink analog I/Q signal after the frequency mixing to the A/D converter;
step a2: the A/D converter converts the downlink analog I/Q signal output by the transceiver into the downlink digital I/Q signal; and
step a3: the bus protocol conversion module performs the bus protocol conversion on the downlink digital I/Q signal and then transmits the converted signal to the system bus of the CPU.

Also based on the above specific structure of the radio access data terminal, in the implementation, step 304 comprises the following sub-steps:
step b1: the bus protocol conversion module performs the bus protocol conversion on the uplink digital information output by the system bus of the CPU to obtain the uplink digital I/Q signal;
step b2: the A/D converter converts the uplink digital I/Q signal output by the bus protocol conversion module into the uplink analog I/Q signal; and
step b3: the transceiver modulates the uplink analog I/Q signal output by the A/D converter and then transmits the modulated signal.

In a specific emplemention, the radio access data terminal can further comprise a low-noise amplifier and a power amplifier, and based on the specific structure of the radio access data terminal, the method for implementing data communications by the radio access data terminal further comprises: the radio access data terminal performs a low-noise amplification on the received downlink radio signal, and performs a power amplification on the modulated uplink radio signal.

It should be understood by those skilled in the art that, the embodiment of the disclosure can be provided as a method, a device (system), or a computer program product. Therefore, the disclosure can be adopted in the form of a complete hardware embodiment, a complete software embodiment or their combination. In addition, the disclosure can also be adopted in the form of a computer program product which is implemented on one or more computer available storage media (including but not limited to a disk memory, a Compact Disc Read-Only Memory (CD-ROM), an optical memory and the like) including computer available program codes therein.

The disclosure is described with reference to the flowchart and virgule or block diagram of the method, the device (system) and the computer program product according to the embodiments of the disclosure. It should be understood that each process and virgule or block of the flowcharts and virgule or block diagrams and the combination of the process and virgule or the block of the flowcharts and virgule or block diagrams can be implemented by computer program instructions. These computer program instructions can be provided to a general-purpose computer, a special-purpose computer, an embedded processor, or a processor of other programmable data processing device to generate a machine, so that a device which is configured to implement the function specified in one or more processes of the flowchart and virgule or one or more blocks of the block diagram is generated by the instruction executed by the computer or the processor of other programmable data processing device.

Although the preferred embodiments of the disclosure have been described, additional change and modification can further be made for these embodiments once those skilled in the art find some basic creative concepts. Therefore, the attached claims are intended to be explained to comprise the preferred embodiments and all the changes and modifications falling within in the scope of the disclosure.

## Claims

1. A system for implementing data communications by a radio access data terminal, comprising the radio access data terminal and a general-purpose computer;
the radio access data terminal is configured to process a downlink radio signal received by the radio access data terminal to obtain a downlink digital In-phase/Quadrature-phase (I/Q) signal and transmit the downlink digital I/Q signal to the general-purpose computer, and is further configured to convert and modulate uplink digital information output by the general-purpose computer and then transmit the modulated signal; and
the general-purpose computer is configured to perform data service processing on the downlink digital I/Q signal received by the general-purpose computer; and is further configured to output uplink digital information which needs to be transmitted.

2. The system for implementing the data communications by the radio access data terminal according to claim 1, wherein the general-purpose computer comprises:
a Central Processing Unit (CPU) configured to perform the data service processing on the downlink digital I/Q signal received by the general-purpose computer; and is further configured to output the uplink digital information which needs to be transmitted by a system bus.

3. The system for implementing the data communications by the radio access data terminal according to claim 2, wherein the radio access data terminal is specifically configured to perform a frequency mixing and an Analog to Digital (A/D) conversion on the downlink radio signal from an air interface to obtain the downlink digital I/Q signal, perform a bus protocol conversion on the downlink digital I/Q signal, and then transmit the converted signal to the system bus of the CPU; and is further configured to perform the bus protocol conversion on the uplink digital information output by the system bus of the CPU to obtain the uplink digital I/Q signal, and perform a Digital to Analog (D/A) conversion on the uplink digital I/Q signal.

4. A radio access data terminal, comprising a transceiver and an Analog to Digital (A/D) converter;
the transceiver is connected with the A/D converter, and is configured to perform a frequency mixing on a received downlink radio signal to obtain a downlink analog I/Q signal, transmit the downlink analog I/Q signal obtained by the frequency mixing to the A/D converter, modulate an uplink analog I/Q signal output by the A/D converter, and then transmit the modulated signal; and
the A/D converter is configured to convert the downlink analog I/Q signal output by the transceiver into a downlink digital I/Q signal, and convert an uplink digital I/Q signal, which is obtained by performing a bus protocol conversion on uplink digital information output by a general-purpose computer, into the uplink analog I/Q signal to be transmitted by the transceiver;
wherein the downlink digital I/Q signal after the bus protocol conversion is performed data service processing by a Central Processing Unit (CPU) in the general-purpose computer.

5. The radio access data terminal according to claim 4, further comprising:
a bus protocol conversion module, which is connected with the A/D converter and the CPU in the general-purpose computer, and is configured to perform the bus protocol conversion on the downlink digital I/Q signal output by the A/D converter and then connect the converted signal to the system bus of the CPU, perform the bus protocol conversion on the uplink digital information output by the system bus of the CPU to obtain the uplink digital I/Q signal, and transmit the uplink digital I/Q signal to the A/D converter; and/or
the bus protocol conversion module and/or the A/D converter are/is integrated into the transceiver.

6. The radio access data terminal according to claim 4 or 5, further comprising a low-noise amplifier, a power amplifier and a duplexer;
the low-noise amplifier is connected with the transceiver, and is configured to receive the downlink radio signal from an air interface by an antenna, perform a low-noise amplification on the received downlink radio signal and then output the signal after the low-noise amplification to the transceiver;
the power amplifier is connected with the transceiver, and is configured to perform a power amplification on the uplink radio signal modulated by the transceiver and then transmit the signal after the power amplification by the antenna; and
the duplexer is connected with the low-noise amplifier and power amplifier, and is configured to separate a received signal and a transmitted signal.

7. A method for implementing data communications by a radio access data terminal, comprising:
processing a received downlink radio signal to obtain a downlink digital In-phase/Quadrature-phase (I/Q) signal, performing a bus protocol conversion on the downlink digital I/Q signal and then transmitting the converted downlink digital I/Q signal to a general-purpose computer by the radio access data terminal; and performing data service processing on the received downlink digital I/Q signal by the general-purpose computer; and/or
outputting uplink digital information which needs to be transmitted by the general-purpose computer; converting and modulating the uplink digital information and then transmitting the moduled signal by the radio access data terminal.

8. The method for implementing the data communications by the radio access data terminal according to claim 7, wherein the step of processing the received downlink radio signal by the radio access data terminal comprises:
performing a frequency mixing on the downlink radio signal from an air interface to obtain a downlink analog I/Q signal by the radio access data terminal; and
performing an Analog to Digital (A/D) conversion on the downlink analog I/Q signal to obtain the downlink digital I/Q signal, performing the bus protocol conversion on the downlink digital I/Q signal and then transmitting the converted signal to a system bus of a CPU in the general-purpose computer.

9. The method for implementing the data communications by the radio access data terminal according to claim 7, wherein the step of converting and modulating the uplink digital information and then transmitting the moduled signal by the radio access data terminal comprises:
performing the bus protocol conversion on the uplink digital information output by the general-purpose computer to obtain an uplink digital I/Q signal by the radio access data terminal; and
performing a Digital to Analog (D/A) conversion on the uplink digital I/Q signal to obtain an uplink analog I/Q signal, modulating the uplink analog I/Q signal and then transmitting the moduled signal.

10. The method for implementing the data communications by the radio access data terminal according to any one of claims 7 to 9, further comprising:
performing a low-noise amplification on the received downlink radio signal, and performing a power amplification on the modulated uplink radio signal by the radio access data terminal.
